# EUROPÄISCHE PATENTSCHRIFT

(11) **EP 2 191 233 B1**
(45) Veröffentlichungstag und Bekanntmachung des Hinweises auf die Patenterteilung: **08.06.2011**
(21) Anmeldenummer: 08802420.3
(22) Anmeldetag: 19.09.2008
(51) Int. Cl.: G01C 21/32

(54) **VORRICHTUNG UND VERFAHREN ZUM AKTUALISIEREN VON KARTENDATEN**
APPARATUS AND METHOD FOR UPDATING MAP DATA
DISPOSITIF ET PROCÉDÉ D'ACTUALISATION DE DONNÉES CARTOGRAPHIQUES

(30) Priorität: 21.09.2007 DE 102007045082
(43) Veröffentlichungstag der Anmeldung: 02.06.2010
(73) Patentinhaber: Fraunhofer-Gesellschaft zur Förderung der angewandten Forschung e.V., 80686 München (DE)
(72) Erfinder: MEYER, Steffen, 91052 Erlangen (DE); HUPP, Jürgen, 90425 Nürnberg (DE); VAUPEL, Thorsten, 34576 Hornberg (DE)
(74) Vertreter: Schenk, Markus
(86) Internationale Anmeldenummer: PCT/EP2008/007914
(87) Internationale Veröffentlichungsnummer: WO 2009/040063

(56) Entgegenhaltungen:
- EP-A- 1 530 025
- EP-A- 1 708 152
- DE-A1- 10 030 932
- DE-A1-102006 034 999
- JP-A- 2005 283 426
- US-A1- 2002 120 703
- US-A1- 2005 283 699
- US-A1- 2007 021 908

## Beschreibung

Die vorliegende Erfindung bezieht sich auf Vorrichtungen und Verfahren zum Aktualisieren von Kartendaten, insbesondere zum Aktualisieren von digitalen Kartendaten.

Die Verbreitung von Lokalisierungstechnologien begann mit der Einführung des GPS-Systems (GPS = Global Positioning System) einen rasanten Verlauf zu nehmen. Das GPS-System ermöglicht es, in hoher Präzision und auf benutzerfreundliche Art und Weise Positionen, insbesondere auf der Erdoberfläche, zu bestimmen. Eine Freigabe der Genauigkeit des GPS-Systems für private Zwecke und eine Miniaturisierung und verbesserte Mobilität der Endgeräte haben seine breite Akzeptanz und Nutzung weiter steigen lassen.

Nach Erreichen einer kritischen Masse an Nutzern und Anwendungen führt nunmehr eine weitergehende Integration von Lokalisierungstechnologien in Massenprodukte, wie beispielsweise SmartPhones oder PDAs (PDA = Personal Digital Assistant) und eine Entstehung relevanter, ortsbezogener Dienste zu einer weiteren Verbreitung. Einen ebenso wichtigen Anteil an dieser Entwicklung tragen die inzwischen verfügbaren Karteninformationen in verschiedenen Ausprägungen, die eine sinnvolle Anwendung von Lokalisierungstechnologien erst ermöglichen.

Die Generierung von Kartenmaterial ist eine aufwendige Prozedur. Es dienen verschiedene Quellen als Grundlage, wie z. B. Daten öffentlich-rechtlicher Verwaltungsinstanzen für Außen- bzw. Outdoor-Bereiche oder Daten von Architekten für Innen- bzw. Indoor-Bereiche. Die Generierung geschieht in Abhängigkeit von Anwendung, Detaillierungsgrad, Lokalisierungstechnologie und Anforderungen teilweise automatisiert oder manuell. Ergänzt wird die Erstellung und der Import bestehender Daten durch eine gezielte manuelle Messwertaufnahme. Ein Beispiel ist das systematische Abfahren von Straßenzügen mit protokollierenden Systemen zur Kartenerstellung.

Um diesen Erstellungsaufwand zu reduzieren und auch den ständigen Veränderungen der Umwelt Rechnung zu tragen, ist eine geeignete Herangehensweise notwendig. Ebenso muss eine Methodik geschaffen werden, um nicht oder unpräzise erfasste Bereiche bei Relevanz, sprich Nutzung, integrieren zu können oder zusätzliche Informationen mit aufzunehmen.

Ein weiterer Aspekt ist die Einbeziehung von Daten, die nicht in klassischen Geoinformationssystemen (GIS) repräsentiert werden und z. B. das Verhalten von Personen oder die Nutzbarkeit von Elementen (Flächen, Gebäuden etc.) betrifft. Hierzu bedarf es der Schaffung entsprechender Instanzen, die diese Informationen sammeln, auswerten und die Datenbasis geeignet ergänzen.

Im Stand der Technik sind mehrere Wege bekannt, die zur Erstellung von Kartenmaterial für Lokalisierungsanwendungen beschritten werden können. Den grundlegendsten, wenngleich auch aufwendigsten Weg vollziehen öffentliche Verwaltungsinstanzen, welche weitreichende manuelle Messungen mit terrestrischen oder astronomischen Bezugspunkten (z. B. Gestirne, Satelliten) durchführen. Dies ist erforderlich, da historisch kaum alternative Methoden möglich waren und zudem eine rechtliche Haltbarkeit gewährleistet sein muss. Neben der initialen Erstellung bedeutet insbesondere die Aktualisierung der Kartendaten einen großen Aufwand, so dass mit teilweise enormem Ressourceneinsatz sukzessive bekannte und unbekannte Veränderungen der realen Welt in das Kartenmaterial eingepflegt werden. Ergänzt werden können die Karten durch Informationen anderer Dimensionen, wie z. B. statistische oder verhaltensbezogene Daten, Straßennetze etc. Solche logischen Informationen resultieren allerdings nicht in Veränderungen einer Kartendatenbasis selbst, sondern haben den Charakter zusätzlicher Sichten.

Ergänzt werden diese Quellen für Kartenausgangsmaterial teilweise durch spezialisierte Inhalteanbieter. Dabei werden zum einen öffentlich-rechtliche Geoinformationssysteme (GIS) genutzt. Ein Geoinformationssystem ist dabei ein rechnergestütztes Informationssystem, das aus Hardware, Software, Daten und den Anwendungen besteht. Mit ihm können raumbezogene Daten digital erfasst und redigiert, gespeichert und reorganisiert, modelliert und analysiert sowie alphanumerisch und grafisch präsentiert werden. Zusätzlich konzentrieren sich spezialisierte Inhalteanbieter aber auf eine Erstellung einer eigenen Datenbasis. Dazu werden beispielsweise Fahrzeuge mit (mehreren) hochwertigen GPS-Empfängern ausgestattet und sodann systematische Messfahrten im Straßennetz des Operationsgebiets vorgenommen. Diese ebenfalls aufwendige Methode dient vielmehr der Erfassung und Bereitstellung von Informationen über befahrbare Straßen und Wege in Ergänzung mit Zusatzinformationen (z. B. Einbahnstraßen, Haltestellen) und Bebauung ohne Detaillierung. Auch hier tritt das Problem auf, die Kartendaten, an Veränderungen der Realität angepasst, aktuell zu halten. Die DE 10030932 A1 beschreibt ein Verfahren zur Erzeugung, Prüfung, Ergänzung und/oder Aktualisierung von Straßenkartendaten. Dabei wird während der Fahrt eines Fahrzeugs die aktuelle Fahrzeugposition über ein Positionsbestimmungssystem erfasst und in einem Speicher abgelegt. Auf dem Speicher können die gemessenen Trajektorien in mindestens eine Datenbank übertragen werden. Eine Datenverarbeitungseinheit wertet die gemessenen Positionsdaten aus und erzeugt, prüft, ergänzt oder aktualisiert hiermit eine digitalisierte Straßenkarte. Vorzugsweise werden in der Datenbank Positionsmessungen mehrerer Fahrzeuge zusammengeführt und dann einer statischen Auswertung unterzogen. Die überarbeitete Straßenkarte kann über einen Übertragungsweg einem Benutzer der Straßenkarte wieder zur Verfügung gestellt werden.

Die US 2005/0283699 A1 beschreibt ein Kartenfehlerinformationserfassungssystem, das die Sammlung der Kartenfehlerinformationen fördern kann sowie die Anzahl von Arbeitsstunden reduzieren kann, die zum Durchsuchen der Seite und zum Verifizieren erforderlich sind, ob die gesammelten Kartenfehlerinformationen genau sind. Das Kartenfehlerinformationserfassungssystem weist eine Positionserfassungsvorrichtung auf, die Bilderfassungseinrichtungen zum Erfassen von Bilddaten, die einen tatsächlichen Zustand von einer und in der Nähe einer aktuellen Position anzeigen, und eine Zentrierungsvorrichtung umfasst, wobei die Positionserfassungsvorrichtung wirksam ist, um Kartenfehlerinformationen, die eine Position der Karteninformationen und Bilddaten umfassen, wo bewertet wird, dass ein Unterschied vorliegt, zu der Zentrierungsvorrichtung zu übertragen. Die Zentrierungsvorrichtung ist wirksam, um die Karteninformationen zu korrigieren, nach einem Verifizieren, ob der Unterschied bei den Karteninformationen genau ist oder nicht, unter Verwendung der Bilddaten. Ferner ist die Zentrierungsvorrichtung wirksam, um einen Bewertungspunkt für jede der Positionserfassungsvorrichtungen zu berechnen, die die Kartenfehlerinformationen übertragen haben, so dass Operatoren, die die Positionserfassungsvorrichtungen betreiben, gemäß ihren Bewertungspunkten belohnt werden können.

Die DE 10 2006 034 999 A1 beschreibt ein Straßenkarten-Verwaltungssystem zur Ausführung der folgenden Schritte: Auftragen einer Verteilungskarte einer vergangenen Richtung und einer Straßenkarte einer zukünftigen Richtung unter Verwendung von Fahrpositionsdaten mehrerer Fahrzeuge, die während einer vergangenen Richtungssammeldauer bzw. einer zukünftigen Richtungssammeldauer über ein Breitbereichsnetz gesammelt werden. Vergleichen der zwei Verteilungskarten, um eine Differenzialverteilung zu extrahieren, Definieren unter einer vorbestimmten Bedingung als eine jüngst geöffnete oder geschlossene Straße, welche in der Verteilungskarte einer vergangenen Richtung nicht vorhanden ist und in der Verteilungskarte einer zukünftigen Richtung vorhanden ist bzw. in der Verteilungskarte einer vergangenen Richtung vorhanden ist und in Verteilungskarte einer zukünftigen Richtung nicht vorhanden ist, und Wiedergeben der definierten Ergebnisse auf den vorhandenen Straßenkartendaten zum Aktualisieren.

Die US 2007/0021908 A1 bezieht sich allgemein auf Systeme und Verfahren zum Identifizieren und Beseitigen von Diskrepanzen bei elektronischen Karten. Ausführungsbeispiele eines Systems und eines Verfahrens zum Korrigieren von Diskrepanzen bei einer elektronischen Karte umfassen das Empfangen von Ortsinformationen von einer oder mehreren Rechenvorrichtungen unter Verwendung der elektronischen Karte, Identifizieren einer Diskrepanz zwischen der elektronischen Karte und den Ortinformationen, und Ändern der elektronischen Karte, um die Diskrepanz zu beseitigen.

Diese Aufgabe wird durch eine Vorrichtung gemäß Patentanspruch 1, ein Verfahren gemäß Patentanspruch 15 und ein Computerprogramm gemäß Patentanspruch 16 gelöst.

Der vorliegenden Erfindung liegt die Erkenntnis zugrunde, dass derzeit verfügbare Lokalisationssysteme es zentral oder lokal erlauben, Informationen über eine Historie von ermittelten Positionen von mobilen Einheiten zu protokollieren und weiter zu verarbeiten. Durch Protokollierung können Sequenzen von ermittelten Positionen mobiler Teilnehmer eines Lokalisierungssystems erzeugt werden. Ein zeitlicher und räumlicher Bezug dieser ermittelten Positionen zueinander und zwischen diesen Dimensionen (Zeit, Raum) ermöglicht es, einen zurückgelegten Weg einer mobilen Einheit zu repräsentieren. Die zurückgelegten Wege bzw. Pfade der mobilen Einheiten können gesammelt und weiterverarbeitet werden, um sie mit vorhandenen Informationen bzw. Kartendaten über die entsprechende Umgebung zu verknüpfen.

Zunächst erfolgt beispielsweise eine Aufbereitung der ermittelten Positionen bzw. gesammelten Ortsinformationen einer mobilen Einheit, ggf. eine Normierung geographischer und zeitlicher Art, eine Bewertung hinsichtlich Quelle und/oder Qualität und ggf. weitere Schritte abhängig von der Ausführung der vorliegenden Erfindung. Im Anschluss können die derart gesammelten Ortsinformationen analysiert werden, indem typische zurückgelegte Wege mit einer bestimmten Parametrisierung gruppiert und identifiziert werden. Einflussgrößen können dabei z. B. eine Anzahl von Wegen, Geschwindigkeit, Richtung bzw. Wegprofil, Lokalisierungstechnologie, räumlicher und zeitlicher Abstand sein. So können, einstellbar, in gewissen Grenzen und Schärfen, Pfade in einem vorbestimmten Gebiet bzw. Ortsgebiet erkannt und markiert werden, worauf eine Klassifikation erfolgen kann, die den ermittelten Charakter der zurückgelegten Wege hinsichtlich ihrer Rückwirkung auf die Kartendaten einstuft. Die Klassifikation dient als Grundlage, um neugewonnene Informationen in verschiedener Art in einer Datenbasis bzw. Datenbank zu repräsentieren. Beispielsweise kann derart bestimmt werden, ob eine Straße mit bestimmter Basisausdehnung oder ein Fußweg als unstrukturierte, begehbare Fläche modelliert wird. Auch eine Zuverlässigkeit der neuen Kartendaten kann mitprotokolliert werden und einer weiteren Verarbeitung als Hinweis über deren Herkunft dienen.

Ausführungsbeispiele der vorliegenden Erfindung schaffen dazu eine Vorrichtung zum Aktualisieren von Kartendaten für ein vorbestimmtes Gebiet, mit einer Einrichtung zum Sammeln von Ortsinformationen eines zurückgelegten Weges in dem vorbestimmten Gebiet, einer Einrichtung zum Überlagern der gesammelten Ortsinformationen mit den Kartendaten für das vorbestimmte Gebiet, einer Einrichtung zum Ermitteln von, in den Kartendaten für das vorbestimmte Gebiet fehlenden oder widersprüchlichen, Abschnitten basierend auf den überlagerten gesammelten Ortsinformationen und einer Einrichtung zum Aktualisieren der Kartendaten in den fehlenden oder widersprüchlichen Abschnitten, basierend auf den überlagerten, gesammelten Ortsinformationen.

Dabei handelt es sich bei Ausführungsbeispielen der vorliegenden Erfindung bei den Kartendaten insbesondere um digitale Kartendaten, wie z. B. digitale Fotografien von Landschaften wie beispielsweise Satellitenfotografien oder CAD-Daten (CAD = Computer Aided Design) für Indoor-Bereiche von Gebäuden.

Bei Ausführungsbeispielen der vorliegenden Erfindung werden die Ortsinformationen basierend auf Funksignalen ermittelt. Dies können Funksignale von satellitengestützten Lokalisierungs- bzw. Navigationssystemen sein, aber auch Funksignale von RFID-Systemen (RFID = Radio Frequency Identification), IEEE802.11 WLAN-Netzwerken (WLAN = Wireless Local Area Network) oder anderen gängigen Mobilfunknetzen, die beispielsweise auf GSM- (Global System for Mobile Communications), UMTS- (Universal Mobile Telecommunications System), OFDM-(Orthogonal Frequency Division Multiplex) und weiteren Standards (Z.B. DECT, Bluetooth, ...) basieren.

Ein Vorteil der vorliegenden Erfindung besteht darin, dass zur Aktualisierung der Kartendaten eine ohnehin bestehende allgemeine Verbreitung von mobilen Einheiten zur Ortsinformationserfassung genutzt wird. Komponenten von Lokalisierungstechnologien (Hardware und Software) sind zur Massenware geworden und in einer Vielzahl verschiedener, handelsüblicher Endgeräte diverser Preisklassen integriert. Dies hat zu einer breiten, kontinuierlichen Nutzung im Alltag geführt, die nicht weiter Vermessungsinstitutionen oder kommerziellen Anwendern vorbehalten ist. Somit können mittels Ausführungsbeispielen der vorliegenden Erfindung Kartendaten durch Aufzeichnung von zurückgelegten Wegen von mobilen Einheiten mit hohem Detaillierungsgrad generiert bzw. aktualisiert werden.

Bevorzugte Ausführungsbeispiele der vorliegenden Erfindung werden nachfolgend Bezug nehmend auf die beiliegenden Zeichnungen näher erläutert. Es zeigen:
- Fig. 1: ein Blockdiagramm einer Vorrichtung zum Aktuali- sieren von Kartendaten gemäß einem Ausführungs- beispiel der vorliegenden Erfindung;
- Fig. 2: ein Flussdiagramm zur Veranschaulichung eines Verfahrens zum Aktualisieren von Kartendaten ge- mäß einem Ausführungsbeispiel der vorliegenden Erfindung;
- Fig. 3a: ein Ablaufdiagramm zur Erläuterung des Sammelns von Ortsinformationen von zurückgelegten Wegen in einem vorbestimmten Gebiet gemäß einem Ausfüh- rungsbeispiel der vorliegenden Erfindung;
- Fig. 3b: ein Ablaufdiagramm eines Überlagerns der gesam- melten Ortsinformationen mit vorliegenden Karten- daten und eines Ermittelns von in den Kartendaten für das vorbestimmte Gebiet fehlenden oder wider- sprüchlichen Abschnitten basierend auf den über- lagerten gesammelten Ortsinformationen gemäß ei- nem Ausführungsbeispiel der vorliegenden Erfin- dung;
- Fig. 3c: ein Ablaufdiagramm einer Aktualisierung der Kar- tendaten gemäß einem Ausführungsbeispiel der vor- liegenden Erfindung;
- Fig. 4: eine schematische Darstellung zur Erläuterung des Sammelns der Ortsinformationen gemäß einem Aus- führungsbeispiel der vorliegenden Erfindung;
- Fig. 5a,b: Darstellungsmöglichkeiten von Ortsinformationen gemäß Ausführungsbeispielen der vorliegenden Er- findung;
- Fig. 6: eine Darstellung zur Erläuterung einer Filterung von Ortsinformationen gemäß einem Ausführungsbei- spiel der vorliegenden Erfindung;
- Fig. 7: eine schematische Darstellung zur Erläuterung des Vermittelns von fehlenden oder widersprüchlichen Kartenabschnitten gemäß einem Ausführungsbeispiel der vorliegenden Erfindung;
- Fig. 8: eine schematische Darstellung von zwei unter- schiedlichen auf Zuverlässigkeitsinformationen basierend gewichteten Wegen;
- Fig. 9: eine Darstellung von unterschiedlichen Gewich- tungsfunktionen gemäß Ausführungsbeispielen der vorliegenden Erfindung;
- Fig. 10: eine Darstellung von unterschiedlichen Weg- bzw. Koordinatenprofilen resultierend aus unterschied- lichen Gewichtungen;
- Fig. 11: eine Darstellung von mit Ortsinformationen über- lagerten fotografischen Kartenmaterials gemäß ei- nem Ausführungsbeispiel der vorliegenden Erfin- dung;
- Fig. 12: eine Überlagerung von Ortsinformationen einer Mehrzahl von ähnlichen zurückgelegten Wegen; und
- Fig. 13: ein Übersichtsdiagramm zur Veranschaulichung der Arbeitsweise von Ausführungsbeispielen der vor- liegenden Erfindung.

Bezüglich der nachfolgenden Beschreibung sollte beachtet werden, dass bei den unterschiedlichen Ausführungsbeispielen gleiche oder gleichwirkende Funktionselemente gleiche Bezugszeichen aufweisen und somit die Beschreibungen dieser Funktionselemente in den verschiedenen nachfolgend dargestellten Ausführungsbeispielen untereinander austauschbar sind.

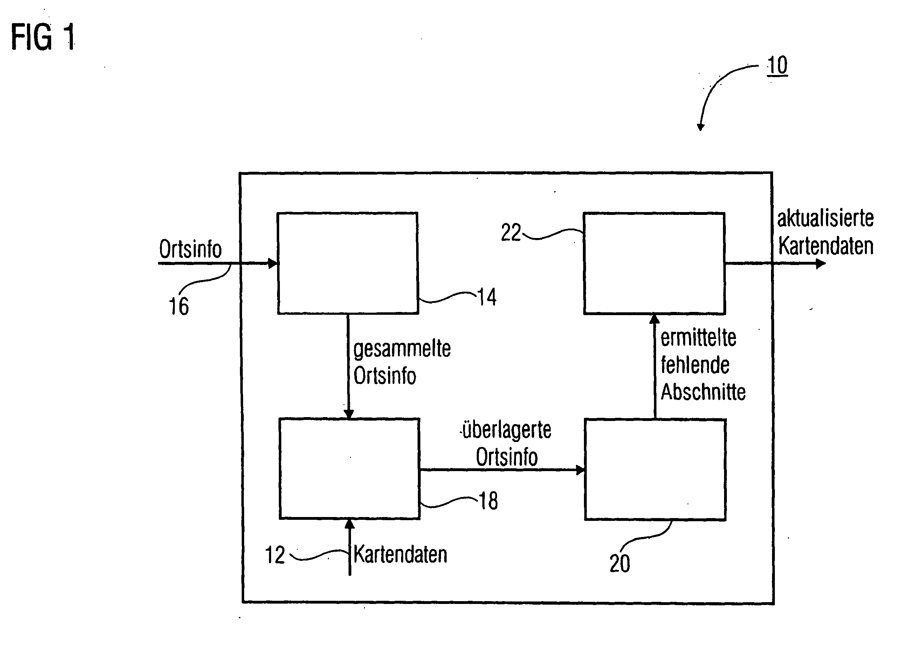

Fig. 1 zeigt ein schematisches Blockdiagramm einer Vorrichtung 10 zum Aktualisieren von Kartendaten 12 für ein vorbestimmtes Gebiet.

Die Vorrichtung 10 umfasst eine Einrichtung 14 zum Sammeln von Ortsinformationen 16 eines zurückgelegten Weges in dem vorbestimmten Gebiet. Die Einrichtung 14 zum Sammeln ist mit einer Einrichtung 18 zum Überlagern der gesammelten Ortsinformationen mit den Kartendaten 12 für das vorbestimmte Gebiet gekoppelt. Ferner umfasst die Vorrichtung 10 eine Einrichtung 20 zum Ermitteln von in den Kartendaten 12 für das vorbestimmte Gebiet fehlenden oder widersprüchlichen Abschnitten basierend auf den überlagerten, gesammelten Ortsinformationen. Mit der Einrichtung 20 zum Ermitteln ist eine Einrichtung 22 gekoppelt, zum Aktualisieren der Kartendaten 12 in den fehlenden oder widersprüchlichen Abschnitten, basierend auf den überlagerten, gesammelten Ortsinformationen.

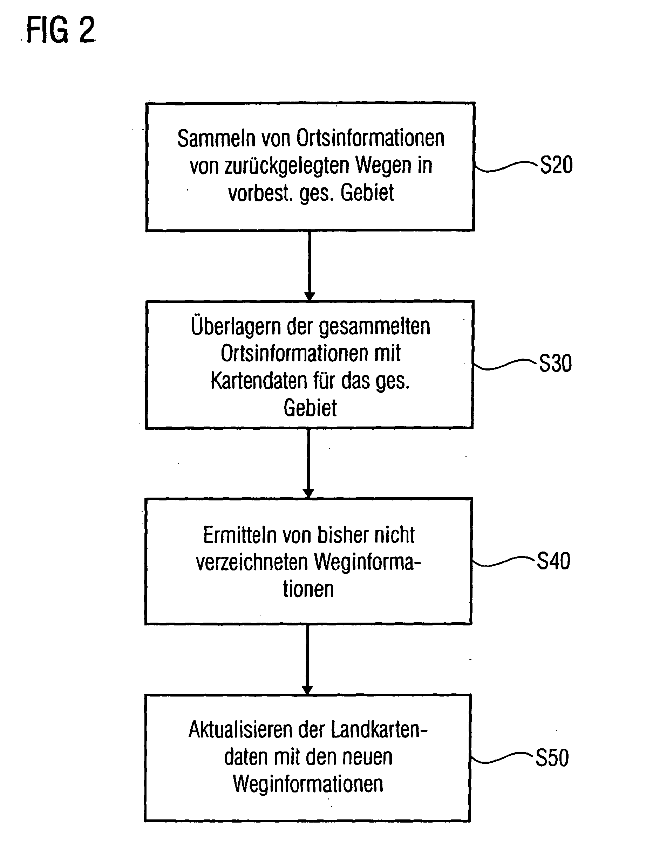

Die Funktionsweise der in Fig. 1 schematisch gezeigten Vorrichtung 10 zum Aktualisieren der Kartendaten 12 wird im Nachfolgenden anhand der Fig. 2-12 näher erläutert.

Fig. 2 zeigt ein Flussdiagramm, um den Ablauf eines Verfahrens zum Aktualisieren der Kartendaten 12 gemäß einem Ausführungsbeispiel der vorliegenden Erfindung darzustellen.

In einem ersten Schritt S20 werden die Ortsinformationen 16 in dem vorbestimmten Gebiet gesammelt. Dabei können verschiedene Ortungs- bzw. Lokalisationstechnologien zugrunde gelegt sein. Das wohl bekannteste System zur Lokalisierung bzw. Navigation im Outdoor-Bereich ist das satellitengestützte GPS-System. Für die Lokalisierung bzw. Navigation innerhalb von Gebäuden bzw. in einem Indoor-Bereich können beispielsweise Infrarot-Systeme, RFID-Systeme oder WLAN-Systeme herangezogen werden. Das GPS-System ist derzeit nur für den Outdoor-Bereich zuverlässig verfügbar. Neuere Erweiterungen, wie hochsensible Empfänger oder das sogenannte A-GPS (Assisted-GPS) stellen Versuche dar, die Technologie auch innerhalb von Gebäuden nutzbar zu machen. A-GPS kombiniert dabei die Nutzung des satellitenbasierten GPS-Systems mit einem Empfang sogenannter Assistenzinformationen aus zellularen Mobilfunknetzen. Für eine Lokalisierung innerhalb von Gebäuden oder innerhalb eines relativ kleinen, begrenzten Außenbereichs bieten sich beispielsweise Funksysteme an, die auf dem WLAN-Standard basieren. Dabei kann eine WLAN-basierte Ortsbestimmung beispielsweise durch eine Art RF-Fingerabdruck (RF = Radio Frequency) realisiert werden, wobei ein entsprechender Funkempfänger elektromagnetische Eigenschaften seiner Umgebung, wie beispielsweise Empfangsfeldstärkepegel, aufzeichnet und daraus eine relativ genaue Position des Funkempfängers abgeleitet werden kann.

Unter den Voraussetzungen, dass ein (mobiles) lokalisierendes Teilnehmergerät sowohl über Karten-, Referenzinformationen und insbesondere über Messwerte einer Sensorik verfügt, kann es die eigene Position ermitteln. Ohne Karten- bzw. Referenzinformationen können die Messwerte jedoch an eine Lokalisierungseinrichtung übertragen werden, die aus den Messwerten die Position des Teilnehmergeräts ermitteln kann. Für den Schritt S20 des Sammelns der Orts- bzw. Lokalisierungsinformationen ist es unerheblich, auf welcher Technologie die Positionsbestimmung fußt und ob sie lokal, zentral oder in beliebiger Art hybrid vollzogen wird. Relevant ist lediglich, dass kontinuierlich geortet werden kann. Das bedeutet, dass beim Sammeln der Ortsinformationen Positionsbestimmung und ggf. Positionsausgabe im allgemeinen zyklisch ausgeführt werden und nicht interaktiv von einem Anwender getriggert werden. Dabei ist eine Frequenz, in der die Ortsinformationen 16 ermittelt werden, hinreichend hoch, um einem Teilnehmer eine nicht allzu sprunghafte Präsentation bieten zu können und eine Funktionsfähigkeit von Ausführungsbeispielen der vorliegenden Erfindung auch bei höheren Bewegungsgeschwindigkeiten sicherzustellen.

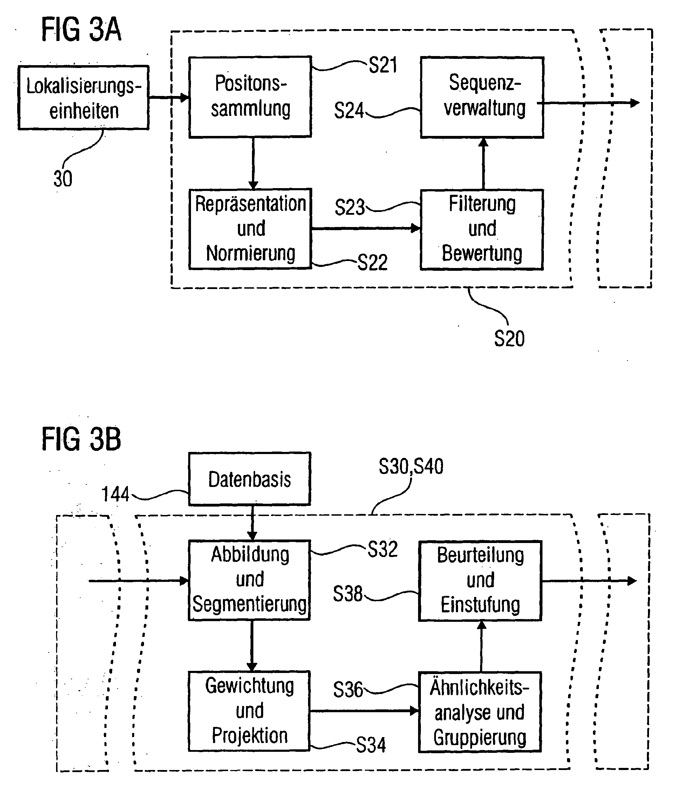

Wie es in Fig. 3a schematisch gezeigt ist, wird bei dem Schritt S20 des Sammelns der Ortsinformationen 16 also in einem Schritt S21 eine Sequenz von Positionen erzeugt, welche eine Bewegung eines teilnehmerspezifischen Geräts bzw. einer Lokalisierungseinheit repräsentiert. Dabei ist die erzeugte Sequenz an den ermittelten bzw. geschätzten Orten gestützt.

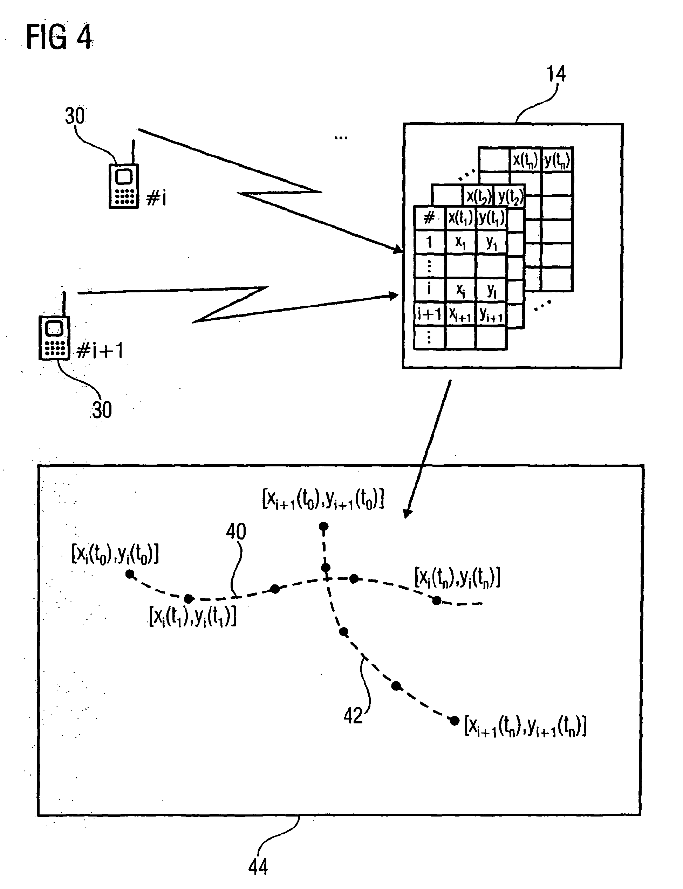

Fig. 4 zeigt exemplarisch zwei mobile Teilnehmergeräte 30, welche jeweils einem Teilnehmer i bzw. i+1 (i = 0,1,2,...,I) zugeordnet sind. Die Teilnehmergeräte 30 senden jeweils ihre ermittelten Ortsinformationen 16 zu der Einrichtung 14 zum Sammeln. D. h. die Einrichtung 14 zum Sammeln ist gemäß Ausführungsbeispielen mit Sendeempfängern der mobilen Teilnehmergeräte 30 gekoppelt. Die teilnehmerspezifischen Ortsinformationen 16 umfassen gemäß Ausführungsbeispielen der vorliegenden Erfindung für einen Messzeitpunkt tₙ (n = 0,1,2,...,N), Ortskoordinaten xᵢ(tₙ), yᵢ(tₙ) und ggf. zᵢ(tₙ) entsprechend einer Höhe für eine dreidimensionale Darstellung. Ferner umfassen die Ortsinformationen 16 Zeitinformationen über den jeweiligen Messzeitpunkt tₙ (n = 0,1,2,...,N) und eine Sendeempfänger-Kennung des jeweiligen Teilnehmergeräts 30. Eine zeitliche Aneinanderreihung der Ortsinformationen [(xᵢ(t₀), yᵢ(t₀)), ... , (xᵢ(t_{N}), yᵢ(t_{N}))] bzw. [(xᵢ₊₁(t₀), yᵢ₊₁(t₀)), ... , (xᵢ₊₁(t_{N}), yᵢ₊₁(t_{N}))] entspricht einem von dem jeweiligen Teilnehmer zurückgelegten Weg 40, 42 in einem vorbestimmten Ortsbereich 44. Bei typischen Kartendarstellungen handelt es sich bei dem vorbestimmten Ortsbereich 44 um einen zweidimensionalen Bereich. Natürlich sind aber auch Anwendungen der vorliegenden Erfindung für dreidimensionale Ortsbereiche denkbar.

Die von den mobilen Teilnehmern bzw. deren Endgeräten 30 erzeugten Ortsinformationen 16 liegen in der Einrichtung 14 zum Sammeln gemäß Ausführungsbeispielen also jeweils als eine Sequenz von Koordinaten [(xᵢ(t₀), yᵢ(t₀)), ... , (xᵢ(t_{N}), yᵢ(t_{N}))] bzw. [(xᵢ₊₁(t₀), yᵢ₊₁(t₀)), ... , (xᵢ₊₁(t_{N}), yᵢ₊₁(t_{N}))] vor.

Bezugnehmend auf Fig. 3a werden in einem nächsten Unterschritt S22 die gesammelten Ortsinformationen geeignet repräsentiert und normiert. Dabei können die gesammelten Ortsinformationen beispielsweise als Positionssequenzen oder Ketten von Vektoren dargestellt werden.

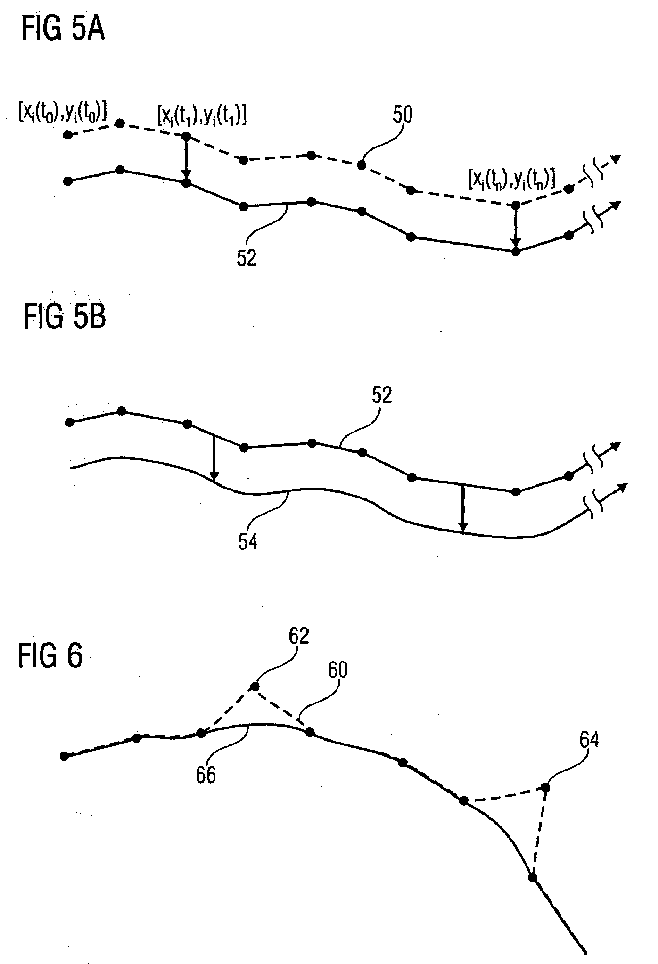

Wie es in Fig. 5a dargestellt ist, liegen nach dem Unterschritt S21 die von einem Teilnehmer i bzw. dessen Endgerät 30 stammenden Ortsinformationen 16 als eine Sequenz 50 von Koordinaten [(xᵢ(t₀), yᵢ(t₀)),..., (xᵢ(t_{N}), yᵢ(t_{N}))] vor. Eine Möglichkeit ist, diese Sequenz 50 direkt zu verwenden, um durch eine Detektion von Positionshäufungen beliebte, begehbare und zuverlässig detektierte Bereiche zu identifizieren. Bei späteren Betrachtungen geht dabei eventuell aber ein Richtungs- und Zeitbezug verloren, so dass eine sequenzielle Modellierung für Ausführungsbeispiele der vorliegenden Erfindung sinnvoller erscheint. Dazu ist in Fig. 5a ein Polygonzug 52 dargestellt, der die ermittelten Positionen [(xᵢ(t₀), yᵢ(t₀)), ... , ([(xᵢ(t₀), yᵢ(t_{N}))] in einem globalen und/oder einem lokalen Koordinatensystem als Stützpunkte beinhaltet. Charakteristisch ist eine Ergänzung der nicht definierten Bereiche zwischen den Positionen [(xᵢ(t₀), yᵢ(t₀)), ..., (xᵢ(t₀), yᵢ(t_{N}))] durch eine Verbindung der Positionen mittels Geradenabschnitten. Diese Vorgehensweise ist für komplette Historien von Ortsinformationen geeignet, kann aber auch für zeitlich und räumlich begrenzte Bereiche durchgeführt werden.

Neben dieser einfachen stückweisen Interpolation mittels eines Polygonzugs 52 können bei Ausführungsbeispielen der vorliegenden Erfindung auch wesentlich aufwendigere Verfahren verwendet werden, um aus den diskret vorliegenden Positionswerten [(xᵢ(t₀), yᵢ(t₀)), ... , (xᵢ(t_{N}), yᵢ(t_{N}))] eine kontinuierliche Funktion zu schaffen, die einen zurückgelegten Weg beschreibt. Verschiedene mathematische Ansätze unterschiedlichen Grades können angewendet werden, welche in Fig. 5b beispielhaft durch Bezugszeichen 54 gekennzeichnet sind. Diese höhergradige Darstellung ermöglicht über numerische Analysen hinaus einen funktionalen Vergleich hinsichtlich einer Gruppierung und Ähnlichkeitsanalyse. Schleifen in zurückgelegten Wegen können bei Ausführungsbeispielen der vorliegenden Erfindung durch eine entsprechende Detektion entfernt werden.

Eventuell ist in dem Unterschritt S22 noch eine Normierung der gesammelten Ortsinformationen notwendig, um eine Vergleichbarkeit zwischen einer Mehrzahl von unterschiedlichen Teilnehmern mit unterschiedlichen Teilnehmergeräten zurückgelegten Wegen zu erzeugen. Eine derartige Normierung kann beispielsweise dann erfolgen, wenn die unterschiedlichen Teilnehmergeräte auf unterschiedlichen Lokalisationstechnologien basieren und ihre Positions- und/oder Zeitdaten z. B. in unterschiedlichen Datenformaten an die Einrichtung 14 zum Sammeln übermitteln. Des Weiteren ist es vorstellbar, dass geographische Positionsdaten (Längen- und Breitenangaben) in Pixel-Koordinaten umgerechnet werden müssen. Dies ist beispielsweise dann der Fall, wenn die Kartendaten 12 für den vorbestimmten Ortsbereich als digitale Bilddaten vorliegen. Eine Normierung in Unterschritt S22 erhöht eine spätere Vergleichbarkeit von unterschiedlichen zurückgelegten Wegen.

Das Sammeln S20 umfasst gemäß Ausführungsbeispielen in einem weiteren Unterschritt S23 (Fig. 3a) eine Verbesserung der Zuverlässigkeit der gesammelten Ortsinformationen durch ein Entfernen von technologiebedingten Fehlern, beispielsweise mittels geeigneter Filter. Dazu ist in Fig. 6 eine Sequenz 60 von Ortsinformationen gezeigt, die einen zurückgelegten Weg eines Teilnehmers i repräsentiert. Auffällig sind einzelne Positionsdaten 62, 64, die eine nicht unerhebliche Abweichung von einem angenommenen, zurückgelegten Weg 66 darstellen. Um die Positionssequenz 60 dem angenommenen zurückgelegten Weg 66 anzugleichen, umfasst die Einrichtung 14 zum Sammeln gemäß Ausführungsbeispielen z. B. ein Tiefpassfilter, um die Positionssequenz 60 zu glätten und damit die als fehlerhaft angenommenen Positionen 62 und 64 den tatsächlichen oder wahrscheinlicheren Positionen anzugleichen.

In dem Unterschritt S23 können die gesammelten Ortsinformationen weiterhin bewertet werden, um die zurückgelegten Wege in Abhängigkeit verschiedener Kriterien, wie z. B. Zuverlässigkeit und Qualität der jeweiligen Lokalisierungstechnologie, Reputation der Quelle, Alter etc. zu klassifizieren. Dazu ist gemäß Ausführungsbeispielen die Einrichtung 14 zum Sammeln angepasst, um die gesammelten Ortsinformationen mit Zuverlässigkeitsinformationen zu versehen.

In einem weiteren Unterschritt S24 werden die gesammelten, gefilterten und bewerteten Ortsinformationen entsprechend den zurückgelegten Wegen einer Ortsinformationssequenz-Verwaltungseinheit übergeben. Dazu weist die Einrichtung 14 zum Sammeln einen Speicher auf. Dabei handelt es sich bei Ausführungsbeispielen beispielsweise um einen digitalen Speicher. Hier werden die gesammelten, gefilterten und bewerteten Ortsinformationen hinsichtlich Vergleichbarkeit und Zugriffsmöglichkeiten gesammelt und optimiert verwaltet. Aus dem (digitalen) Speicher erfolgt eine Weitergabe zur Auswertung einer Mehrzahl von Pfaden bzw. zurückgelegter Wege über eine separate Betrachtung einzelner zurückgelegter Wege hinaus.

Nach dem Sammeln S20 der Ortsinformationen 16 in dem vorbestimmten Gebiet folgt, bezugnehmend auf Fig. 2, ein Überlagern S30 der gesammelten Ortsinformationen mit den Kartendaten 12 für das vorbestimmte Gebiet. In einem nächsten Schritt S40 folgt ein Ermitteln von in den Kartendaten 12 für das vorbestimmte Gebiet fehlenden oder widersprüchlichen Abschnitten basierend auf den überlagerten, gesammelten Ortsinformationen.

Ein beispielhaftes Ablaufdiagramm für eine Kombination der Schritte S30 und S40 ist schematisch in Fig. 3b gezeigt.

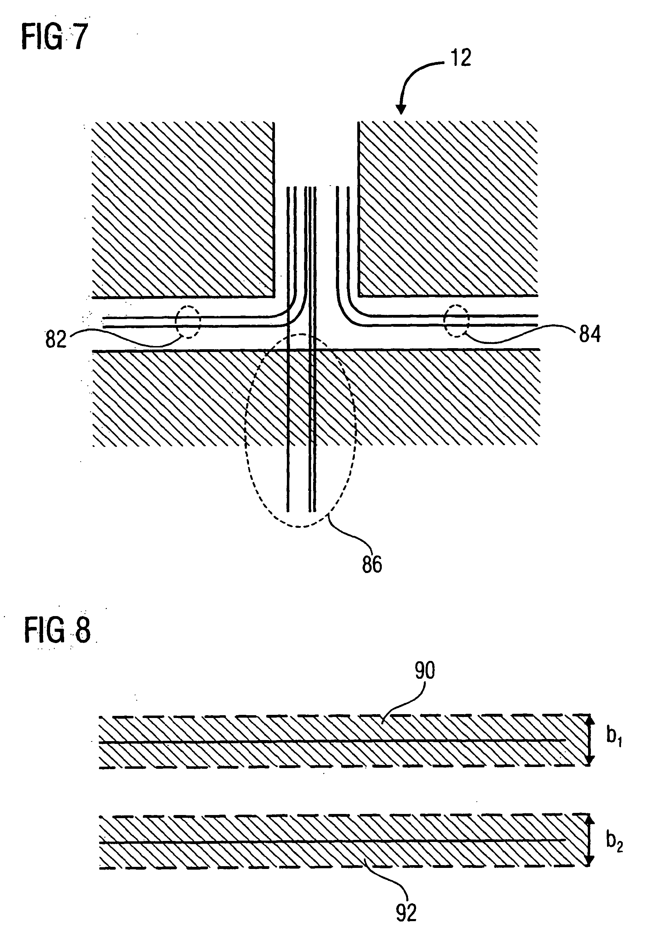

Die in dem Schritt S20 gesammelten und vorverarbeiteten Ortsinformationen liegen in dem (digitalen) Speicher in einer Art Rohform vor, in der sie in einem Unterschritt S32 auf ein bekanntes bzw. vorbestimmtes Gebiet abgebildet werden können. Dazu ist die Einrichtung 14 zum Sammeln gemäß Ausführungsbeispielen angepasst, um Koordinaten der gesammelten Ortsinformationen 16 auf den Maßstab der Kartendaten des vorbestimmten Gebiets zu skalieren. Des Weiteren könnenin dem Unterschritt S32 gemäß Ausführungsbeispielen der vorliegenden Erfindung Teile von zurückgelegten Wegen bzw. Pfaden in Bereichen, die bekanntermaßen begeh- oder befahrbar sind, aus einer weiteren Betrachtung ausgeklammert werden. Natürlich können auch die Ortsinformationen, die in den Kartendaten 12 bekannten Bereichen entsprechen, weiterverarbeitet werden, dienen dann aber eher einer Aktualisierung, Be- oder Aufwertung bekannter Daten als der Detaillierung oder Ergänzung. Der Unterschritt S23 soll im Folgenden anhand von Fig. 7 näher erläutert werden.

Fig. 7 zeigt bekannte Kartendaten 12 für ein vorbestimmtes Gebiet mit einer Mehrzahl von auf die Kartendaten 12 abgebildeten Orts- bzw. Weginformationen 82, 84, 86. Die Weginformationen 82, 84 sind sämtlich auf bereits bekannte Abschnitte (z. B. Straßen oder Fußwege) abgebildet. Teile von weiteren Weginformationen 86 stehen im Widerspruch zu den existierenden Kartendaten 12, indem sie in Abschnitte der Kartendaten 12 hineinreichen, die bisher als nicht begeh- bzw. befahrbar gekennzeichnet sind. In dem Unterschritt S32 werden nun die auf die bekannten Abschnitte der Kartendaten 12 abgebildeten Weginformationen 82, 84 und die entsprechenden bekannten Teile der Weginformationen 86 nicht weiter berücksichtigt. D. h. diese bekannten Pfadsegmente können für eine weitere Betrachtung aus Effizienzgründen vernachlässigt werden. Lediglich die in Fig. 7 eingekreisten Teile der Weginformationen 86 werden berücksichtigt. Gemäß Ausführungsbeispielen ist die Einrichtung 18 zum Überlagern also angepasst, um die zurückgelegten Wegen entsprechenden Ortsinformationen mit den Kartendaten 12 derart zu verknüpfen, so dass in den Kartendaten 12 bekannte Abschnitte bei den zurückgelegten Wegen entsprechenden Ortsinformationen unberücksichtigt bleiben.

Wurden in dem Schritt S32 diejenigen Weg- bzw. Pfadsegmente ermittelt, die in den Kartendaten 12 fehlenden oder widersprüchlichen Abschnitten zuzuordnen sind, so können diese Wegsegmente gemäß Ausführungsbeispielen in einem nächsten Unterschritt S34 auf die entsprechenden Abschnitte der Kartendaten 12 projiziert werden. Dazu können die Wegsegmente beispielsweise in einer Abhängigkeit von einer in dem Unterschritt S23 vorgenommenen Bewertung gewichtet und z. B. als Pixel-Matrizen (mit und ohne Streuung) oder (Näherungs-)Funktionen dargestellt werden. Mögliche Ausführungsformen für die Gewichtung werden im Nachfolgenden anhand der Fig. 8-11 näher erläutert.

Fig. 8 zeigt zwei Pfadsegmente 90, 92, die in Abhängigkeit von wählbaren Kriterien, wie beispielsweise ihrer Zuverlässigkeit, gewichtet sind. In dem in Fig. 8 exemplarisch gezeigten Szenario wurde der zurückgelegte Weg 90 mit einer weniger zuverlässigen Lokalisierungstechnologie ermittelt als der zurückgelegte Weg 92. Daher wird der zurückgelegte Weg 90 mit einer ersten Ortsunschärfefunktion beaufschlagt, die in dem Schritt S34 zu einer Projektion des zurückgelegten Weges 90 auf die entsprechenden Kartenabschnitte führt, die den zurückgelegten Weg 90 in einem Unschärfekorridor mit einer Breite b1 erscheinen lassen. Im Gegensatz dazu wird der mit der genaueren Lokalisierungstechnologie aufgezeichnete, zurückgelegte Weg 92 mit einer zweiten Ortsunschärfefunktion versehen, so dass er in einem weniger breiten Unschärfekorridor mit einer Breite b2 auf den entsprechenden Kartenabschnitten dargestellt wird.

Die Einrichtung 18 zum Überlagern ist gemäß Ausführungsbeispielen also angepasst, um die zurückgelegten Wegen entsprechenden Ortsinformationen entsprechend ihrer Genauigkeit und/oder Zuverlässigkeit mit Ortsunschärfefunktion zu gewichten, um eine Ortswahrscheinlichkeitsaussage zu erhalten. Die Projektionen der zurückgelegten Wege auf die jeweiligen Kartenabschnitte können zu einer gewollten Überlagerung der Wege führen, speziell in Bereichen, welche in der Realität einem zurückgelegten Weg entsprechen.

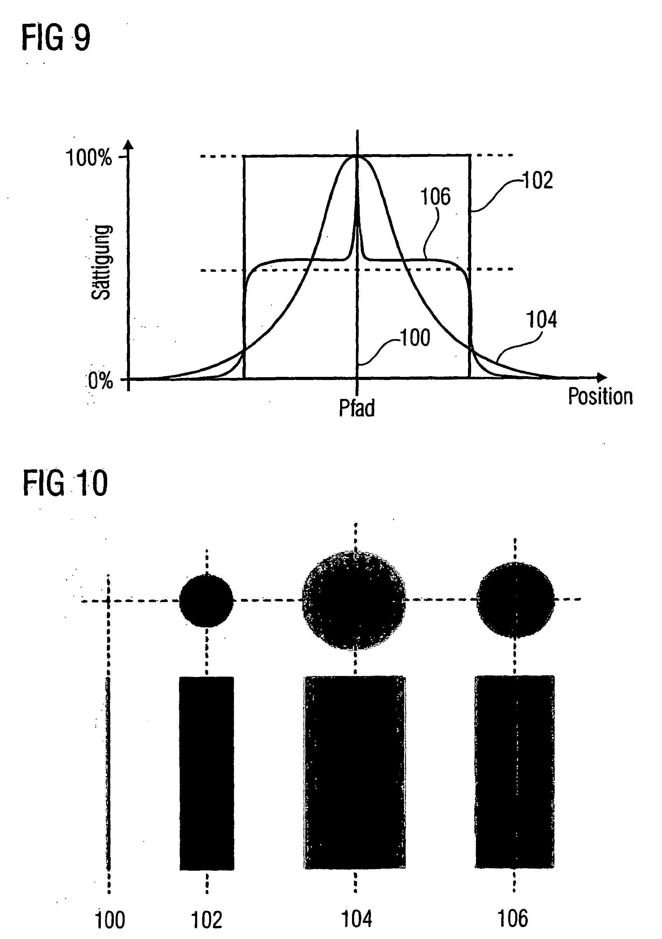

Weitere Ausführungsbeispiele für eine Gewichtung von Ortsinformationen entsprechend zurückgelegter Wege sind in Fig. 9 gezeigt.

Abhängig von der ursprünglichen Repräsentation der gesammelten Ortsinformationen und einer Analysealgorithmik können passende Gewichtungen und/oder Streuungen verwendet werden. Fig. 9 zeigt mögliche Sättigungs- bzw. Gewichtungsprofile eines projizierten Positionspunktes oder Positionspfades.

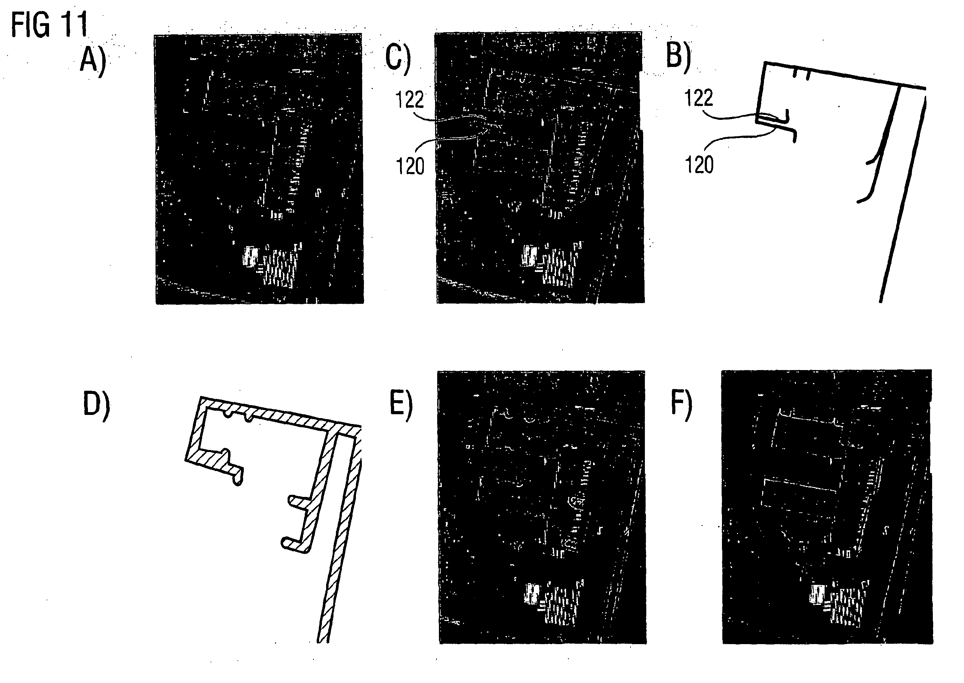

Bei dem mit Bezugszeichen 100 gekennzeichneten Sättigungsprofil wird ein Punkt [(xᵢ(tₙ), yᵢ(tₙ))] oder Pfad [(xᵢ(t₀), yᵢ(t₀)), ... , (xᵢ(t_{N}), yᵢ(t_{N}))] mit maximaler Sättigung genau an seinem Ort ohne Streuung eingezeichnet, so wie es in Fig. 10 ebenfalls mit dem Bezugszeichen 100 dargestellt ist. Bei dem in Fig. 9 mit Bezugszeichen 102 gekennzeichneten Sättigungsprofil wird ein Punkt [(xᵢ(tₙ), yᵢ(tₙ))] mit einem scharf eingezeichneten Kreis mit der ursprünglichen Position als Mittelpunkt und ein Pfad [(xᵢ(t₀), yᵢ(t₀)), .... , (xᵢ(t_{N}), yᵢ(t_{N}))] analog mit einer gewissen Breite dargestellt, so wie es in Fig. 10 ebenfalls mit dem Bezugszeichen 102 gekennzeichnet ist. Eine in den Fig. 9 und 11 mit dem Bezugszeichen 104 gekennzeichnete, parabelförmige Sättigungscharakteristik verdeutlicht eine höhere Gewichtung gemessener Positionen gegenüber einer konstruierten Streuung. Eine in den Fig. 9 und 11 mit Bezugszeichen 106 gekennzeichnete Charakteristik verknüpft die vorher genannten Charakteristika, in dem eine Streuung keine scharfen Ränder besitzt, ein plateauartiger Bereich mit einer reduzierten Sättigung Einfluss nimmt und Messwerte durch einen Peak als vollgesättigte Punkte bzw. Linien aus der Streuung hervortreten.

Neben den im Vorhergehenden beschriebenen Charakteristika sind natürlich weitere Formen denkbar, wie z. B. Dreiecke oder Trapeze. Ein Grund für die Einführung einer Streuung ist beispielsweise ein Schließen von Löchern zwischen benachbarten zurückgelegten Wegen und ein Abfangen von Ungenauigkeiten, die bei der Lokalisierung systembedingt entstehen können. Ein maximaler Sättigungspegel kann zusätzlich verändert werden, z. B. in Abhängigkeit einer Lokalisierungszuverlässigkeit oder der Geschwindigkeit. Für eine Analyse können also alle in einem Kartenabschnitt verfügbaren Punkte und/oder Pfade nach diesem Schema eingezeichnet werden. Aus einer Überlagerung können daraufhin häufig benutzte Bereiche identifiziert werden.

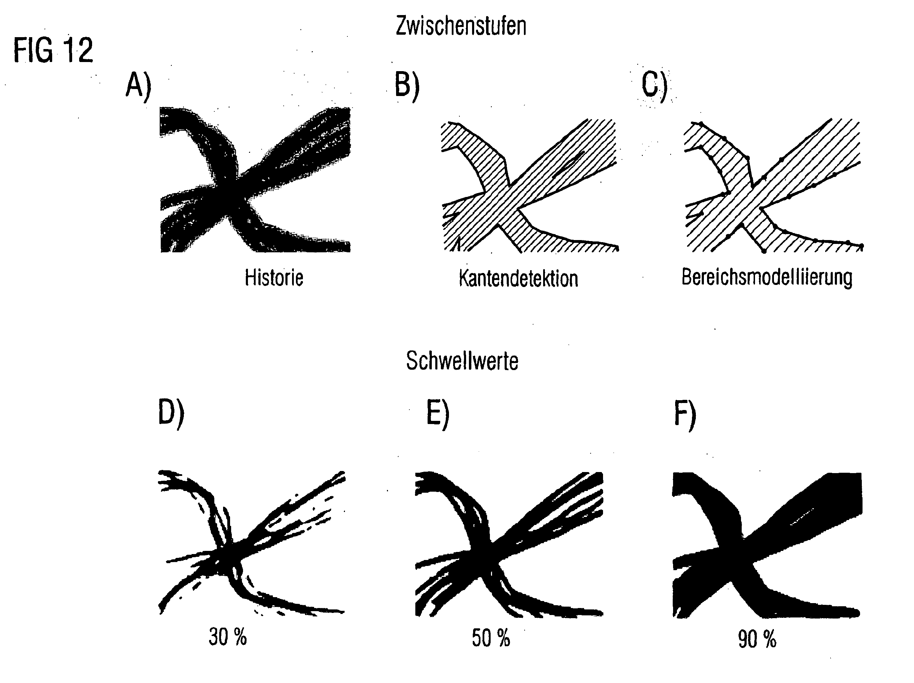

Nach der Gewichtung und Projektion der Ortsinformationen auf entsprechende Kartenabschnitte in dem Unterschritt S34 folgt in einem nächsten Unterschritt S36 gemäß Ausführungsbeispielen eine Ähnlichkeitsanalyse, in der räumlich benachbarte Pfadsegmente ähnlichen Profils detektiert werden, indem eine Mehrzahl zurückgelegter Wege miteinander verglichen wird. Dazu ist die Einrichtung 20 zum Ermitteln gemäß Ausführungsbeispielen angepasst, um aus einer Mehrzahl von zurückgelegten Wegen entsprechenden gesammelten Ortsinformationen ähnliche Wege zu ermitteln, die um einen maximal zulässigen Toleranzbereich voneinander abweichen. Die Analyse kann auf verschiedene Arten und Weisen durchgeführt werden. Eine erste Möglichkeit basiert auf der Projektion S34 der Ortsinformationen und einer anschließenden graphischen Bewertung. Eine Mehrzahl von Ortsinformationen entsprechend einer Mehrzahl zurückgelegter Wege in einem bestimmten Kartenabschnitt werden additiv übereinandergelegt, so dass sich ein Abdruck einer gesamten verfügbaren Bewegungshistorie in dem Kartenabschnitt niederschlägt. Insbesondere abgestufte Streuungscharakteristika bieten sich hier an. Bei einfacher Liniendarstellung entstehende Löcher werden so geschlossen und Nachbarschaftsbeziehungen zwischen Pfaden werden durch die Überlagerung hergestellt, so wie es in Fig. 12a gezeigt ist.

Zusammenhängende Bereiche können nun per graphischer Kantendetektion festgelegt werden, wobei eine Erkennungsschwelle bezüglich der Sättigung einstellbar ist (Fig. 12b). Vorzugsweise können die derart detektierten Kanten wiederum z. B. als Polygonzüge oder Polygone modelliert werden, so wie es in Fig. 12c gezeigt ist. So können Löcher zwischen benachbarten Pfaden entfernt und Kanten geglättet werden. Einfluss auf Relevanz und Weiterverwendung können z. B. die Anzahl der eingeflossenen Pfade, die durchschnittliche Sättigung oder der Abstand zwischen den eingeflossenen Pfaden ausüben.

Ebenso denkbar ist eine spaltenweise Betrachtung. Hier wird mit den Punkten der Pfade an einem definierten Schnitt gerechnet und die Abstände untereinander bestimmt. Die Schnitte können dabei auf verschiedene Arten erfolgen, wie z. B. achsenparallel oder orthogonal zu einem Bezugspfad. Die Abstände können dann pro Schnitt oder aufsummiert eine Ähnlichkeit und Nähe von Pfaden quantifizieren, so dass daraus Pfadgruppierungen abgeleitet werden können.

Eine weitere Möglichkeit stellt eine mathematische Analyse dar. Die bereits beschriebene Umrechnung von Ortskoordinaten über einfache Polygonzüge hin zu komplexeren Interpolationen kann hier als Basis dienen. Um Ähnlichkeiten und Nähe von Pfaden bestimmen zu können, können unterschiedliche Berechnungen verwendet werden. Anhand von kontinuierlichen Funktionen können z. B. Integrale oder Steigungen, Absolutwerte, Korrelationen oder sogar Spektralverhalten untersucht werden. Dies kann auf einem globalen oder einem temporär definierten, lokalen Koordinatensystem erfolgen.

In den Fig. 12d-12f ist gezeigt, wie über unterschiedliche Parametrisierungen Ähnlichkeiten und Nähe spezifiziert und eingestellt werden können. In Fig. 12d sind Sättigungsschwellwerte derart eingestellt, dass lediglich sehr eng benachbarte zurückgelegte Wege in eine Gruppe eingeteilt werden, wohingegen in Fig. 12e die Sättigungsschwellwerte zur Gruppenbildung derartig eingestellt sind, dass selbst weiter entfernt benachbarte zurückgelegte Wege einer gemeinsamen Weggruppe zufallen. Sättigungsschwellwerte können beispielsweise geschwindigkeitsabhängig eingestellt werden. Dabei lässt sich eine Geschwindigkeit, mit der ein Weg zurückgelegt wurde, leicht aus den Zeitstempeln für die jeweiligen Ortskoordinaten bestimmen. Die Einrichtung 20 zum Ermitteln ist gemäß Ausführungsbeispielen der vorliegenden Erfindung angepasst, um aus einer Mehrzahl von zurückgelegten Wegen entsprechenden gesammelten Ortsinformationen ähnliche Wege zu ermitteln, die um einen maximal zulässigen Toleranzbereich voneinander abweichen, der durch die Sättigungsschwellwerte bestimmt wird.

Durch die Parametrisierung können Ausreißer herausgefiltert werden, die z. B. durch Fehler in der Lokalisierung entstehen können oder von Nutzern erzeugt wurden, die gängige Wege verlassen haben.

Im Anschluss an die Analyse und Gruppierung der Ortsinformationen der zurückgelegten Wege ist insbesondere ein Unterschritt S38 zur Beurteilung und Einstufung der überlagerten, gesammelten Ortsinformationen wichtig, um später über eine Art einer Einspeisung der aktualisierten Kartendaten 12 in eine Datenbasis zu entscheiden. Bei Ausführungsbeispielen der vorliegenden Erfindung wird, bezugnehmend auf Fig. 3b, bereits zu Beginn der Ortsinformationsanalyse, die durch die Schritte S30 und S40 zusammengefasst werden kann, eine Kartendatenbasis genutzt, um die Ortsinformationen in der Kartendatenbasis gespeicherten Modell- bzw. Kartendaten 12 zuzuordnen. D. h., in den Schritten S30 und S40 werden bereits die widersprüchlichen bzw. fehlenden Kartenabschnitte identifiziert und es ist damit bekannt, an welchen Stellen, sowohl geographisch als auch logisch, Änderungen bzw. Aktualisierungen in den Kartendaten 12 Einzug halten müssen. Die Einstufung in Unterschritt S38 dient dazu, die zu Datenformat und Änderung passende Repräsentation zu wählen. Dabei kann beispielsweise in Abhängigkeit von einer Breite eines zurückgelegten Weges bzw. einer Breite einer Gruppe benachbarter zurückgelegter Wege und/oder der Geschwindigkeiten, mit denen die Wege jeweils zurückgelegt wurden, darauf geschlossen werden, ob es sich bei einem neuen Bereich um einen Fußweg, Fahrradweg oder eine Straße handelt. D. h. die Einrichtung 20 zum Ermitteln ist angepasst, um aus den Ortsinformationen Wegbreite- und/oder Weggeschwindigkeitsinformationen zu extrahieren und basierend darauf eine Klassifizierung der gesammelten Ortsinformationen vorzunehmen. Dabei wird die Breite eines neuen Weges beispielsweise durch einen konstanten Abstand von dem einen zurückgelegten Weg entsprechenden Pfad oder einem mittleren Pfad von zurückgelegten Wegen definiert. Etliche weitere Möglichkeiten, wie eine Bereichsdefinition um eine maximale Ausdehnung eines detektierten, nutzbaren Areals durch ein Polygon, können beispielsweise angewendet werden.

Im Anschluss an die Schritte S30, S40 ist eine Integration der daraus gewonnenen Informationen in die bestehenden Kartendaten 12 notwendig. Dazu umfasst, bezugnehmend auf Fig. 2, das Verfahren zum Aktualisieren der Kartendaten 12 einen Schritt S50 des Aktualisierens der Kartendaten 12 in den fehlenden oder widersprüchlichen Abschnitten basierend auf den überlagerten gesammelten Ortsinformationen.

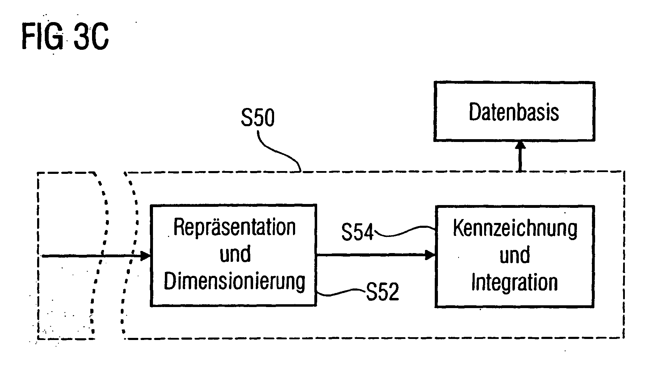

Der Schritt S50 des Aktualisierens umfasst, bezugnehmend auf Fig. 3c, einen Unterschritt S52, in dem die vorher in dem Unterschritt S38 eingestuften neuen Kartenbereiche geeignet repräsentiert und dimensioniert werden. In anderen Worten ausgedrückt bedeutet dies, dass ein als beispielsweise Fahrradweg eingestufter Bereich auch als Fahrradweg repräsentiert wird und ebenfalls geeignet dimensioniert wird. D. h., ein Fahrradweg wird im Allgemeinen wohl weniger breit sein als eine vielbefahrene mehrspurige Straße. Nach der Repräsentation und Dimensionierung folgt ein weiterer Unterschritt S54, in dem die repräsentierten und dimensionierten Ortsinformationen schließlich entsprechend gekennzeichnet werden, beispielsweise logisch oder grafisch, z. B. durch Farbe, Metadaten oder andere Zeichen, und schließlich in die Kartendatenbasis integriert werden, um so eine aktualisierte Version der Kartendaten 12 basierend auf den vorher überlagerten und gesammelten Ortsinformätionen zu erhalten.

Allerdings erfolgt bei Ausführungsbeispielen der vorliegenden Erfindung eine Aktualisierung der Kartendaten 12 nur dann, wenn ein Aktualisierungskriterium, wie z. B. eine Mindestanzahl an ähnlichen Wegen, die einer in den Kartendaten 12 nicht enthaltenen Weginformation entsprechen, erfüllt ist. In anderen Worten ausgedrückt bedeutet dies, dass wenige zurückgelegte ähnliche Wege unter Umständen nicht ausreichen, um eine Aktualisierung vorzunehmen, da die wenigen zurückgelegten ähnlichen Wege noch nicht wirklich z. B. eine tatsächlich vorhandene Straße oder ähnliches garantieren.

Im Folgenden soll anhand von Fig. 11 das erfindungsgemäße Konzept noch einmal veranschaulicht werden.

Fig. 11a zeigt Kartendaten 12 in Form einer Luftbildfotografie für ein vorbestimmtes Gebiet um ein Lagergebäude. Fig. 11b zeigt gesammelte Ortsinformationen von zurückgelegten Wegen in dem vorbestimmten Gebiet um das Lagergebäude. Dabei zeigt Fig. 11b lediglich exemplarisch einige, wie die zwei Pfade 120, 122, die jeweils nach einem der im Vorhergehenden beschriebenen Muster gewichtet wurden. Es lässt sich erkennen, dass sich weite Bereiche der beiden zurückgelegten Wege 120, 122 überlagern. Fig. 11c zeigt die Überlagerung der zurückgelegten Wege mit den Kartendaten 12 für das vorbestimmte Gebiet um das Lagergebäude. Darin ist zu sehen, dass ein Teil der zurückgelegten Wege 120, 122 einem Weg auf einer Straße entspricht, wohingegen die übrigen Teile der zurückgelegten Wege 120, 122 auf dem Lagergelände liegen.

Fig. 11d zeigt eine Darstellung der zurückgelegten Wege 120, 122, wobei eine Begrenzung des durch eine Gruppierung der Wege 120, 122 detektierten Gebiets dargestellt ist. Das in Fig. 11d detektierte neue Gebiet, für das weitergehende Informationen in dem Kartenmaterial fehlen, ist in Fig. 11e auf die Fotografie projiziert dargestellt.

Bei dem Unterschritt S38, bei dem es um die Beurteilung und Einstufung des detektierten Gebiets geht, können nun, z. B. bei digitalen Fotografien, ähnliche Bereiche in den Kartendaten 12 gesucht werden, d. h. Bereiche, die beispielsweise dieselbe Farbschattierung wie der detektierte Bereich aufweisen. Dazu ist die Einrichtung 20 zum Ermitteln angepasst, um aus den Ortsinformationen und Oberflächenbeschaffenheitsinformationen aus den Kartendaten 12 einen begeh- und/oder befahrbaren Bereich in dem vorbestimmten Gebiet zu ermitteln. In dem in Fig. 11 gezeigten Beispiel führt dies zu einer Erweiterung des detektierten Bereichs um zusätzliche Asphaltflächen auf der Straße und dem Lagergelände. Da in der digitalen Fotografie zusätzliche Flächen existieren, die dieselbe Oberflächenbeschaffenheit bzw. Farbschattierung aufweisen wie der detektierte Bereich, kann davon ausgegangen werden, dass die zusätzlichen Bereiche ebenso als begeh- bzw. befahrbar klassifiziert werden können. Dadurch entsteht der in Fig. 11f eingezeichnete, schraffierte Bereich, der in den Kartendaten 12 als begeh- bzw. befahrbar gekennzeichnet und integriert werden kann.

Das im Vorhergehenden vorgestellte erfindungsgemäße Konzept kann zur Erreichung verschiedener Zielsetzungen verwendet werden. Ein offensichtliches Beispiel ist eine Aktualisierung bestehenden Kartenmaterials, was bedeutet, dass bereits verfügbare Informationen verifiziert werden. Dies erfolgt mittels einer impliziten Prüfung durch Teilnehmer und Einbindung von Änderungen mit der Laufzeit. Darüber hinaus kann das Kartenmaterial ständig weiter verfeinert werden, indem Ergänzungen vorgenommen werden. Dies bezieht sich insbesondere auf Bereiche, deren Nutzung unbekannt oder ungenau ist. Auch Änderungen der Realität, z. B. durch Bautätigkeiten, finden über ein sich anpassendes Nutzerverhalten Eingang in das Kartenmaterial. Maximaler Mehrwert kann sich ergeben, wenn die derart verarbeiteten Daten von Lokalisierungstechnologie und Verhaltenshistorie genutzt werden können, um Kartenmaterial völlig neu zu erzeugen. Im Extremen bedeutet dies, dass eine in der Nutzbarkeit unbekannte Fläche nach und nach um Informationen ergänzt wird. Sie kann daraufhin als Karte wiederum verschiedenen Lokalisierungsanwendungen zur Verfügung gestellt werden und dort als Ausgangsmaterial dienen. Ein Beispiel ist die Erstellung von Gebäude- oder Landschaftsplänen, ohne über weitergehende Konstruktionsdetails zu verfügen. Wege, Durchfahrten, Flure, Räume etc. können derart identifiziert werden.

Ein weiterer Aspekt ist der Abgleich von Bewegungshistorie und abgeleiteter Nutzungsklassifikation mit Pixel-basierten Daten, üblicherweise fotografisch generierten Bildinformationen. Dies bedeutet, dass die erfahrungsbasierte Ortsinformation, z. B. mit Luft- oder Satellitenaufnahmen (in beliebigen Frequenzbereichen) kombiniert wird. Bei derartigem Foto- oder Pixelmatching werden die beiden Informationsebenen, Bild- und Ortsinformationen, überlagert und daraufhin abgeglichen. So können z. B. anhand der Fotografien Randbereiche analytisch bestimmter Bereiche präzisiert werden. Darüber hinaus können aus Farben, Farbübergängen und Texturen auch Fehler identifiziert und entfernt werden. Ebenso ist weiterhin eine Abschätzung potentiell nutzbarer Bereiche möglich, für die selbst noch keine Positionshistorie vorliegt. Dies geschieht dann über die Ähnlichkeit zu den bereits verknüpften (gematchten) Bereichen.

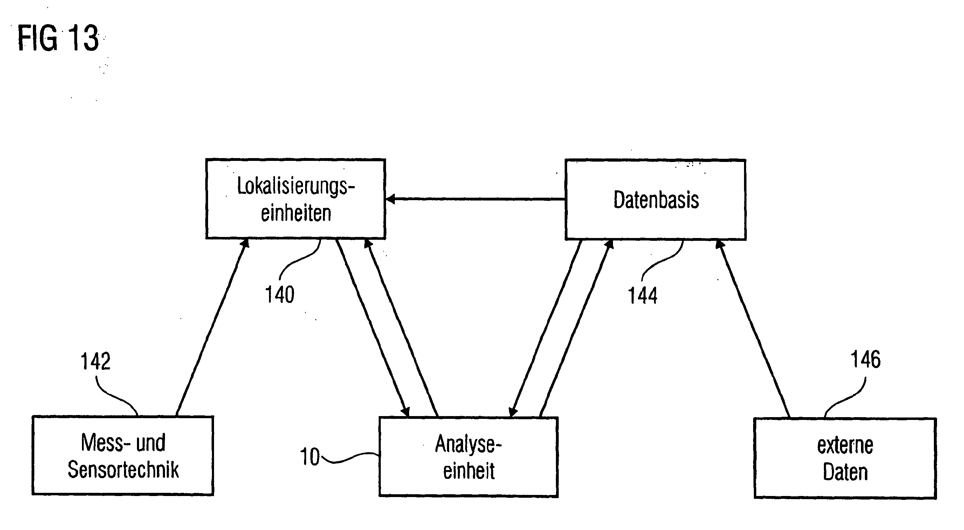

Zusammenfassend soll anhand von Fig. 13 noch einmal der Einsatz des erfindungsgemäßen Konzepts in einem Navigations- bzw. Lokalisierungssystem dargestellt werden.

Von mobilen Teilnehmern bzw. deren zugeordneten Lokalisierungseinheiten 140 werden mittels Mess- und Sensortechnik 142 Positionssequenzen [(xᵢ(t₀), yᵢ(t₀)), ... , (xᵢ(t_{N}), yᵢ(t_{N}))] erzeugt. Der zeitliche und räumliche Bezug der Positionen der Positionssequenzen zueinander und zwischen diesen Dimensionen (Zeit, Raum) ermöglicht es, den jeweils zurückgelegten Weg zu repräsentieren. Diese zurückgelegten Wege bzw. Pfade werden von der Vorrichtung 10 gesammelt und weiterverarbeitet, um sie mit vorhandenen Informationen über die Umgebung aus einer Datenbasis 144 zu verknüpfen. Dabei kann die Datenbasis 144 im Vorfeld oder zusätzlich mit externen Daten 146 gefüttert bzw. aktualisiert werden. In der Vorrichtung 10 erfolgt z. B. eine Aufbereitung, ggf. Normierung geographischer und zeitlicher Art, eine Bewertung hinsichtlich Quelle und Qualität der gesammelten Ortsinformationen und ggf. weitere Schritte abhängig von der Ausführungsform der vorliegenden Erfindung. Des Weiteren werden die derartig gesammelten Ortsinformationen analysiert, indem typische zurückgelegte Wege mit einer bestimmten Parametrisierung gruppiert und identifiziert werden. Einflussgrößen sind dabei z. B. Anzahl, Geschwindigkeit, Richtung bzw. Wegprofil, Lokalisierungstechnologie, räumlicher und zeitlicher Abstand. So können, einstellbar in gewissen Grenzen und Schärfen, zurückgelegte Wege in einem Gebiet erkannt und markiert werden, worauf eine Klassifikation erfolgen kann, die den ermittelten Charakter hinsichtlich der Rückwirkung auf das Kartenmaterial der Datenbasis 144 einstuft. Die vorgenannte Bewertung dient als Grundlage, um die neugewonnene Information in verschiedener Art in der Datenbasis 144 zu repräsentieren. Beispielsweise kann derart bestimmt werden, ob eine Straße bestimmter Basisausdehnung oder ein Fußweg als unstrukturierte, begehbare Fläche modelliert wird. Auch die Zuverlässigkeit der neuen Daten kann mitgehalten werden und der weiteren Verarbeitung als Hinweis über die Herkunft dienen.

Besondere Relevanz bekommt der gesamte Ansatz, wenn er als selbstlernendes Verfahren ausgelegt wird, d. h. zyklisch läuft und selbsttätig jede neue Information, die von mobilen Einheiten geliefert wird, bewertet und nach dem oben beschriebenen Vorgehen einarbeitet.

Ausführungsbeispiele der vorliegenden Erfindung nutzen das Verhalten von Anwendern. D. h., dass Menschen oder Fahrzeuge im allgemeinen begeh- oder befahrbare Bereiche verwenden. In der Fahrzeugnavigation werden beispielsweise ermittelte Positionen auch bei geringen Abweichungen auf die wahrscheinlichste Straße in der Nähe projiziert (sogenanntes Map Matching). Dies erhöht hier die Ruhe und Vertrauenswürdigkeit der Visualisierung. Wird im Umkehrschluss davon ausgegangen, dass ein Großteil der mobilen Nutzer Hindernisse meidet und vorgegebenen bzw. vorgeschriebenen Wegen folgt, so können durch Ausführungsbeispiele der vorliegenden Erfindung Informationen über diese zurückgelegten Wege auf das Kartenmaterial gekoppelt werden. Zusätzlich können so mit Ausführungsbeispielen der vorliegenden Erfindung auch unbekannte oder veränderte Wege detektiert werden, wenn diesbezüglich bisher keine Informationen vorlagen. Ein Beispiel ist ein Fußweg durch einen Park, der üblicherweise von einem Großteil der sich dort bewegenden Personen benutzt wird, aber in Kartendatenbanken üblicherweise nicht hinterlegt ist.

Insbesondere wird darauf hingewiesen, dass abhängig von den Gegebenheiten das erfindungsgemäße Schema auch in Software implementiert sein kann. Die Implementierung kann auf einem digitalen Speichermedium, insbesondere einer Diskette oder einer CD mit elektronisch auslesbaren Steuersignalen erfolgen, die so mit einem programmierbaren Computersystem und/oder Microcontroller zusammenwirken können, dass das entsprechende Verfahren ausgeführt wird. Allgemein besteht die Erfindung somit auch in einem Computerprogramm-Produkt mit einem auf einen maschinenlesbaren Träger gespeicherten Programmcode zur Durchführung des erfindungsgemäßen Verfahrens zum Aktualisieren von Kartendaten, wenn das Computerprogramm-Produkt auf einem Rechner und/oder Microcontroller abläuft. In anderen Worten ausgedrückt kann die Erfindung somit als ein Computerprogramm mit einem Programmcode zur Durchführung des Verfahrens zum Aktualisieren von Kartendaten realisiert werden, wenn das Computerprogramm auf einem Computer und/oder Microcontroller abläuft.

Des Weiteren wird darauf hingewiesen, dass die vorliegende Erfindung nicht auf die jeweiligen Bauteile der Vorrichtung 10 oder die erläuterte Vorgehensweise beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn in der Beschreibung und in den Ansprüchen die Einzahl oder unbestimmte Artikel verwendet werden, beziehen sich diese auch auf die Mehrzahl dieser Elemente, solange nicht der Gesamtzusammenhang eindeutig etwas anderes deutlich macht. Dasselbe gilt in umgekehrter Richtung.

## Patentansprüche

1. Vorrichtung (10) zum Aktualisieren von Kartendaten (12) für ein vorbestimmtes Gebiet, mit folgenden Merkmalen:
einer Einrichtung (14) zum Sammeln von Ortsinformationen eines zurückgelegten Weges in dem vorbestimmten Gebiet, wobei die Einrichtung (14) zum Sammeln angepasst ist, um die gesammelten Ortsinformationen mit Zuverlässigkeitsinformationen zu versehen;
einer Einrichtung (18) zum Überlagern der gesammelten Ortsinformationen mit den Kartendaten (12) für das vorbestimmte Gebiet, wobei die Einrichtung (18) zum Überlagern angepasst ist, um die einem zurückgelegten Weg entsprechenden Ortsinformationen entsprechend der Zuverlässigkeitsinformationen zu gewichten, wobei zur Gewichtung jede Koordinate der Ortsinformationen mit einer Ortsunschärfefunktion gewichtet wird, um eine Ortswahrscheinlichkeitsaussage in Form eines dem zurückgelegten Weg entsprechenden Unschärfekorridors zu erhalten;
einer Einrichtung (20) zum Ermitteln von in den Kartendaten (12) für das vorbestimmte Gebiet fehlenden oder widersprüchlichen Abschnitten basierend auf den überlagerten gesammelten Ortsinformationen, wobei die Einrichtung (20) zum Ermitteln angepasst ist, um aus einer Mehrzahl von zurückgelegten Wegen entsprechenden Ortsinformationen ähnliche Wege zu ermitteln, die um einen maximal zulässigen Toleranzbereich voneinander abweichen, und wobei zusammenhängende Bereiche durch Übereinanderlegen von den ähnlichen Wegen entsprechenden Unschärfekorridoren und anschließender Kantendetektion bestimmt werden; und
einer Einrichtung (22) zum Aktualisieren der Kartendaten (12) in den fehlenden oder widersprüchlichen Abschnitten basierend auf den überlagerten, gesammelten Ortsinformationen.

2. Vorrichtung gemäß Anspruch 1, wobei es sich bei den Kartendaten (12) um digitale Kartendaten handelt.

3. Vorrichtung gemäß Anspruch 1 oder 2, bei der die Einrichtung (14) zum Sammeln der Ortsinformationen (16) angepasst ist, um die Ortsinformationen basierend auf Funksignalen zu sammeln.

4. Vorrichtung gemäß einem der vorhergehenden Ansprüche, bei der die Einrichtung (14) zum Sammeln mit einem WLAN-Sendeempfänger gekoppelt ist.

5. Vorrichtung gemäß einem der vorhergehenden Ansprüche, wobei die Ortsinformationen (16) Ortsköordinaten, Zeitinformationen und eine Sendeempfänger-Kennung umfassen.

6. Vorrichtung gemäß einem der vorhergehenden Ansprüche, wobei die Einrichtung (14) zum Sammeln angepasst ist, um Koordinaten der gesammelten Ortsinformationen (16) auf das vorbestimmte Gebiet zu skalieren.

7. Vorrichtung gemäß einem der vorhergehenden Ansprüche, bei der die Einrichtung (14) zum Sammeln eine Einrichtung zum Aufbereiten der gesammelten Ortsinformationen (16) aufweist.

8. Vorrichtung gemäß Anspruch 7, bei der die Einrichtung zum Aufbereiten einen Filter zum Glätten der den zurückgelegten Wegen entsprechenden Ortsinformationen aufweist.

9. Vorrichtung gemäß einem der vorhergehenden Ansprüche, bei der Einrichtung (14) zum Sammeln einen digitalen Speicher aufweist, um die gesammelten Ortsinformationen (16) zu speichern und zu verwalten.

10. Vorrichtung gemäß einem der vorhergehenden Ansprüche, wobei die Einrichtung (18) zum Überlagern angepasst ist, die zurückgelegten Wegen entsprechenden Ortsinformationen mit den Kartendaten (12) zu verknüpfen, so dass in den Kartendaten bekannte Abschnitte bei den zurückgelegten Wegen entsprechenden Ortsinformationen unberücksichtigt bleiben.

11. Vorrichtung gemäß einem der vorhergehenden Ansprüche, bei der die Einrichtung (20) zum Ermitteln angepasst ist, um aus den Ortsinformationen Wegbreite- und/oder Weggeschwindigkeitsinformationen zu extrahieren und basierend darauf eine Klassifizierung der gesammelten Ortsinformationen vorzunehmen.

12. Vorrichtung gemäß einem der vorhergehenden Ansprüche, bei der die Einrichtung (20) zum Ermitteln angepasst ist, um aus den Ortsinformationen und Oberflächenbeschaffenheitsinformationen aus den Kartendaten (12) einen begeh- und/oder befahrbaren Bereich in dem vorbestimmten Gebiet zu ermitteln.

13. Vorrichtung gemäß einem der vorhergehenden Ansprüche, bei der die Einrichtung (22) zum Aktualisieren angepasst ist, eine Aktualisierung der Kartendaten nur dann vorzunehmen, wenn ein Aktualisierungskriterium erfüllt ist.

14. Vorrichtung gemäß Anspruch 13, wobei das Aktualisierungskriterium eine Mindestanzahl an ähnlichen Wegen umfasst, die einer in den Kartendaten nicht enthaltenen Weginformation entsprechen.

15. Verfahren zum Aktualisieren von Kartendaten für ein vorbestimmtes Gebiet, mit folgenden Schritten:
Sammeln (S20) von Ortsinformationen eines zurückgelegten Weges in dem vorbestimmten Gebiet, wobei die gesammelten Ortsinformationen mit Zuverlässigkeitsinformationen zu versehen werden;
Überlagern (S30) der gesammelten Informationen mit den Kartendaten für das vorbestimmte Gebiet, wobei die einem zurückgelegten Weg entsprechenden Ortsinformationen entsprechend der Zuverlässigkeitsinformationen gewichtet werden, wobei zur Gewichtung jede Koordinate der Ortsinformationen mit einer Ortsunschärfefunktion gewichtet wird, um eine Ortswahrscheinlichkeitsaussage in Form eines dem zurückgelegten Weg entsprechenden Unschärfekorridors zu erhalten;
Ermitteln (S40) von in den Kartendaten für das vorbestimmte Gebiet fehlenden oder widersprüchlichen Abschnitten basierend auf den überlagerten, gesammelten Ortsinformationen, wobei aus einer Mehrzahl von zurückgelegten Wegen entsprechenden Ortsinformationen ähnliche Wege ermittelt werden, die um einen maximal zulässigen Toleranzbereich voneinander abweichen, und wobei zusammenhängende Bereiche durch Übereinanderlegen von den ähnlichen Wegen entsprechenden Unschärfekorridoren und anschließender Kantendetektion bestimmt werden; und
Aktualisieren (S50) der Kartendaten in den fehlenden oder widersprüchlichen Abschnitten basierend auf den überlagerten gesammelten Ortsinformationen.

16. Computerprogramm zum Durchführen des Verfahrens zum Aktualisieren von Kartendaten gemäß Anspruch 15, wenn das Computerprogramm auf einem Computer und/oder Microcontroller abläuft.

## Claims

1. Device (10) for updating cartographic data (12) for a predetermined region, comprising:
a means (14) for collecting location information of a path covered in the predetermined region, wherein the means (14) for collecting is formed to provide the collected location information with reliability information;
a means (18) for overlaying the collected location information with the cartographic data (12) for the predetermined region, wherein the means (18) for overlaying is formed to weight the location information that corresponds to the paths covered corresponding to selectable criteria, wherein each coordinate of the location information is weighted with a location unsharpness function for weighting to obtain a location probability statement in form of an unsharpness corridor corresponding to the path covered;
a means (20) for determining portions contradictory or missing in the cartographic data (12) for the predetermined region on the basis of the overlaid collected location information, wherein the means (20) for determining is formed to determine similar paths deviating from each other by a maximum tolerance range admissible from collected location information corresponding to a plurality of paths covered, and wherein contiguous regions are determined by overlaying unsharpness corridors corresponding to the similar paths and ensuing edge detection; and
a means (22) for updating the cartographic data (12) in the missing or contradictory portions on the basis of the overlaid, collected location information.

2. Device according to claim 1, wherein the cartographic data (12) are digital cartographic data.

3. Device according to claim 1 or 2, wherein the means (14) for collecting the location information (16) is formed to collect the location information on the basis of radio signals.

4. Device according to one of the preceding claims, wherein the means (14) for collecting is coupled to a WLAN transceiver.

5. Device according to one of the preceding claims, wherein the location information (16) comprises location coordinates, time information, and a transceiver tag.

6. Device according to one of the preceding claims, wherein the means (14) for collecting is formed to scale coordinates of the collected location information (16) to the predetermined region.

7. Device according to one of the preceding claims, wherein the means (14) for collecting comprises a means for rendering the collected location information (16).

8. Device according to claim 7, wherein the means for rendering comprises a filter for smoothing the location information corresponding to the paths covered.

9. Device according to one of the preceding claims, wherein the means (14) for collecting comprises a digital memory to store and manage the collected location information (16).

10. Device according to one of the preceding claims, wherein the means (18) for overlaying is formed to link the location information corresponding to the paths covered with the cartographic data (12), so that known portions in the cartographic data remain unconsidered in the location information corresponding to the paths covered.

11. Device according to one of the preceding claims, wherein the means (20) for determining is formed to extract path widths and/or path velocity information from the location information and perform classification of the collected location information on the basis thereof.

12. Device according to one of the preceding claims, wherein the means (20) for determining is formed to determine a passable and/or trafficable area in the predetermined region from the location information and surface condition information from the cartographic data (12).

13. Device according to one of the preceding claims, wherein the means (22) for updating is formed to perform an update of the cartographic data only if an update criterion is met.

14. Device according to claim 13, wherein the update criterion comprises a minimum number of similar paths corresponding to path information not contained in the cartographic data.

15. Method of updating cartographic data for a predetermined region, comprising:
collecting (S20) location information of a path covered in the predetermined region, wherein the collected location information is provided with reliability information;
overlaying (S30) the collected information with the cartographic data for the predetermined region, wherein the location information that corresponds to a path covered is weighted corresponding to the reliability information, wherein each coordinate of the location information is weighted with a location unsharpness function for weighting to obtain a location probability statement in form of an unsharpness corridor corresponding to the path covered;
determining (S40) portions contradictory or missing in the cartographic data for the predetermined region on the basis of the overlaid, collected location information, wherein similar paths deviating from each other by a maximum tolerance range admissible are determined from location information corresponding to a plurality of paths covered, and wherein contiguous regions are determined by overlaying unsharpness corridors corresponding to the similar paths and ensuing edge detection; and
updating (S50) the cartographic data in the missing or contradictory portions on the basis of the overlaid collected location information.

16. Computer program for performing the method of updating cartographic data according to claim 15, when the computer program is executed on a computer and/or microcontroller.

## Revendications

1. Dispositif (10) de mise à jour de données cartographiques (12) pour une région prédéterminée, aux caractéristiques suivantes:
un moyen (14) destiné à collecter des informations de lieu d'un trajet parcouru dans la région prédéterminée, le moyen (14) destiné à collecter étant adapté pour pourvoir les informations de lieu collectées d'informations de fiabilité;
un moyen (18) destiné à superposer les informations de lieu collectées avec les données cartographiques (12) pour la région prédéterminée, le moyen (18) destiné à superposer étant adapté pour pondérer les informations de lieu correspondant à un trajet parcouru en fonction des informations de fiabilité, chaque coordonnée des informations de lieu étant, pour la pondération, pondérée par une fonction de contour de lieu indécis, pour obtenir une expression de probabilité de lieu sous forme de corridor de contour indécis correspondant au trajet parcouru;
un moyen (20) destiné à déterminer des segments manquants ou en contradiction dans les données cartographiques (12) pour la région prédéterminée sur base des informations de lieu collectées superposées, le moyen (20) destiné à déterminer étant adapté pour déterminer, à partir d'une pluralité d'informations de lieu correspondant à des trajets parcourus, des trajets similaires différant l'un de l'autre d'une plage de tolérance maximale admissible, et des zones contigües étant déterminées par superposition des corridors de contours indécis correspondants aux trajets similaires et détection de bords successive; et
un moyen (22) destiné à mettre à jour les données cartographiques (12) dans les segments manquants ou en contradiction sur base des informations de lieu collectées superposées.

2. Dispositif selon la revendication 1, dans lequel il s'agit, pour les données cartographiques (12), de données cartographiques numériques.

3. Dispositif selon la revendication 1 ou 2, dans lequel le moyen (14) destiné à collecter les informations de lieu (16) est adapté pour collecter les informations de lieu sur base de signaux de radiofréquence.

4. Dispositif selon l'une des revendications précédentes, dans lequel le moyen (14) destiné à collecter est couplé à un émetteur-récepteur WLAN.

5. Dispositif selon l'une des revendications précédentes, dans lequel les informations de lieu (16) comprennent des coordonnées de lieu, des informations de temps et une identification d'émetteur-récepteur.

6. Dispositif selon l'une des revendications précédentes, dans lequel le moyen (14) destiné à collecter est adapté pour moduler les coordonnées ders informations de lieu collectées (16) sur la région prédéterminée.

7. Dispositif selon l'une des revendications précédentes, dans lequel le moyen (14) destiné à collecter présente un moyen destiné à préparer les informations de lieu collectées (16).

8. Dispositif selon la revendication 7, dans lequel le moyen destiné à préparer présente un filtre pour aplanir les informations de lieu correspondant au trajet parcouru.

9. Dispositif selon l'une des revendications précédentes, dans lequel le moyen (14) destiné à collecter présente une mémoire numérique, pour mémoriser et gérer les informations de lieu collectées (16).

10. Dispositif selon l'une des revendications précédentes, dans lequel le moyen (18) destiné à superposer est adapté pour coupler les informations de lieu correspondant aux trajets parcourus avec les données cartographiques (12), de sorte qu'il ne soit pas tenu compte dans les informations de lieu correspondant aux trajets parcourus des segments connus dans les données cartographiques.

11. Dispositif selon l'une des revendications précédentes, dans lequel le moyen (20) destiné à déterminer est adapté pour extraire des informations de lieu des informations de largeur de route et/ ou de vitesse de route et pour procéder, sur cette base, à une classification des informations de lieu collectées.

12. Dispositif selon l'une des revendications précédentes, dans lequel le moyen (20) destiné à déterminer est adapté pour déterminer, à partir des informations de lieu et des informations de qualité de surface des données cartographiques (12), une zone passable et/ou carrossable dans la région prédéterminée.

13. Dispositif selon l'une des revendications précédentes, dans lequel le moyen (22) destiné à mettre à jour est adapté pour ne procéder à une mise à jour des données cartographiques que lorsqu'un critère de mise à jour est rempli.

14. Dispositif selon la revendication 13, dans lequel le critère de mise à jour comporte un nombre minimum de trajets similaires correspondant à des informations de chemin non contenues dans les données cartographiques.

15. Procédé de mise à jour de données cartographiques pour une région prédéterminée, aux étapes suivantes consistant à:
collecter (S20) des informations de lieu d'un trajet parcouru dans la région prédéterminée, les informations de lieu collectées étant pourvues d'informations de fiabilité;
superposer (S30) les informations de lieu collectées avec les données cartographiques pour la région prédéterminée, les informations de lieu correspondant à un trajet parcouru étant pondérées en fonction des informations de fiabilité, chaque coordonnée des informations de lieu étant, pour la pondération, pondérée par une fonction de contour de lieu indécis, pour obtenir une expression de probabilité de lieu sous forme de corridor de contour indécis correspondant au trajet parcouru;
déterminer (S40) des segments manquants ou en contradiction dans les données cartographiques pour la région prédéterminée sur base des informations de lieu collectées superposées, à partir d'une pluralité d'informations de lieu correspondant à des trajets parcourus étant déterminés des trajets similaires différant l'un de l'autre d'une plage de tolérance maximale admissible, et des zones contigües étant déterminées par superposition des corridors de contours indécis correspondants aux trajets similaires et détection de bords successive; et
mettre à jour (S50) les données cartographiques dans les segments manquants ou en contradiction sur base des informations de lieu collectées superposées.

16. Programme d'ordinateur pour réaliser le procédé de mise à jour de données cartographiques selon la revendication 15 lorsque le programme d'ordinateur est exécuté sur un ordinateur et/ou microcontrôleur.
